# EUROPEAN PATENT APPLICATION

(11) **EP 2 551 230 A1**
(43) Date of publication of application: **30.01.2013**
(21) Application number: 12382276.9
(22) Date of filing: 10.07.2012
(51) Int. Cl.: B66B 23/02, B66B 25/00

(54) **Drive system for driving moving walkways**

(30) Priority: 29.07.2011 ES 201131327
(71) Applicant: ThyssenKrupp Elevator Innovation Center S.A., 33203 Gijón (ES)
(72) Inventor: Cancio Fervienza, Alberto, 33011 Oviedo (ES); Canteli Alvarez, Francisco, 33010 OVIEDO (ES); Florez Castro, Alberto, 33690 Lugo de Llanera - Asturias (ES); Gonzalez Alemany, Miguel Angel, 33007 Oviedo - Asturias (ES); Ojeda Arenas, Jose, 33205 Gijón - Asturias (ES); Pello Garcia, Alberto, 33450 Piedras Blancas - Asturias (ES)
(74) Representative: Carvajal y Urquijo, Isabel

(57) **Abstract**

The present invention relates to a drive system for driving moving walkways, comprising a drive unit (2-2') arranged at each end of the walkway (1), control means (3-3') for controlling each drive unit and overall control means (4) for controlling the set of drive units (2-2').

## Description

### Field of the Invention

The present invention relates to a drive system for driving moving walkways, and more specifically for driving moving walkways used for transporting people and goods and which are formed by an endless band of pallets which move on side guides.

Conventional moving walkways for the indicated purpose are made up of a set of pallets which move on guides, which pallets are secured and fitted on a structure supporting the weight of the components and users. The walkways are further provided with a glass or opaque balustrade which is also secured to the same support structure and on which a handrail moves at the same speed as the pallets.

### Background of the invention

Conventional systems for transporting passengers/goods such as moving walkways include a chain of conveyor pallets which move in a track for the purpose of providing a continuous movement along a specific path. The conveyor pallets are connected to said chain track which moves as a result of a drive system. The drive system normally consists of a chain of conveyor plates, cogged wheels, a shaft and an electric geared motor. The electric motor drives the shaft to which there are integrally attached cogged wheels, which transmit the movement to the links of the chain of conveyor pallets. The conveyor pallets move in the same manner as said chain. The drive system is located at one of the ends of the moving walkway whereas the elements responsible for tensing the system are normally located at the opposite end. The turnover of the conveyor pallets which travel the entire moving walkway in the lower part completing the return trip occurs at these end areas of the moving walkway.

A series of new designs aiming to reduce the maximum machine height has emerged in recent years; the conventional drive system must therefore be modified.

There are several solutions which were chosen according to the walkway concept being used. One of these solutions is described in WO 05042392 from Kone Corporation, according to which the drive system is at least partially located inside the balustrade which is made possible by means of using a flat motor. The drive thus occurs by means of a series of belts or chains which finally drive the chain of pallets which has a short pitch to enable turning over in the small available space, but it otherwise works as a conventional walkway chain.

US 7341139 also from Kone Corporation describes the drive of a handrail and its attachment to the pallets drive and motor system. US 7353932 from Kone Corporation describes the arrangement of a band of pallets and the possible simultaneous use of two drive motors.

ThyssenKrupp's Spanish patent 200601651 describes a compact walkway based on the concept of a band formed by pallets having a pitch shorter than the conventional ones. This walkway comprises a drive system moving the pallets of a moving walkway through drive chains which directly engage the lower part of the drive link chains. The drive chain has separate drive rollers which are made of deformable and elastic materials. The links of the drive chains are connected to one another by attachment shafts and have teeth and jaws in the lower part to engage the drive chain and the rollers.

ThyssenKrupp's Spanish patent with application number 2009311290 proposes a drive system for driving chain less escalators and moving walkways by means of using a set of roller wheels integral with shafts assembled between the departing and returning sections of the band of steps or pallets and engaging either the steps or pallets directly through engaging formations of said steps or pallets on their inner surface or similar formations present in a chain integral with the band of pallets or steps.

All these applications have the drawback of the limitation of power which can be transmitted by the drives to the band of steps or pallets due to the small available space in comparison with conventional drives, hindering the use of several transmission elements and the suitable reinforcement thereof.

These limitations in terms of power transmitted restrict the maximum distance which can "be provided" with these systems in both directions of movement.

Another drawback of having the drive unit at only one end is that for very long horizontal walkways it is necessary to apply in the case of "down" direction (drive unit in the upper head) an excessive force from the tensing station located in the head opposite the drive unit in order to prevent the appearance of areas with excessive negative stresses in the chain/band of pallets. This is so because in that direction the drive pushes the band of pallets and all the load thereon and does not pull it as occurs in the "up" direction.

### Description of the Invention

The present invention relates to a drive system for driving moving walkways of the type initially described which entails a modification in the conventional concept for driving moving walkways.

The object of the invention is to provide a traction scheme based on using several drive units for the purpose of overcoming the problems described above. A drive unit will particularly be used at each end of the walkway, the drive units are controlled such that they work cooperatively.

The drive system of the invention comprises a drive unit arranged at each end of the walkway, control means for controlling each drive unit and overall control means for controlling the set of drive units of the drive system.

The drive units can each include one or more motors and controlling the motors of the drive units so that they work cooperatively, i.e., sharing the total load/power of the system between them is necessary in order to assure a correct operation of the drive system. The motors of the drive units arranged at both ends of the walkway will thus together provide the power necessary for driving said walkway.

The control means for controlling each drive unit will directly control the motor or motors of said drive unit for providing the torque and speed required at all times.

In turn, the overall control means will include a control and/or supervision algorithm, responsible for executing the coordination strategy between the motors of the drive units and issuing the necessary commands to the control means for controlling each drive unit.

The control means for controlling the motor or motors of each drive unit can comprise a frequency variator for alternating current motors with a closed loop vector control algorithm. The frequency variator can include an input rectifier, responsible for generating the direct voltage for a bus, from where a DC-AC inverter powering the motor or motors of the corresponding drive unit is powered.

The drive units arranged on either side of the walkway will work together cooperatively with a master-slave load sharing algorithm, the drive unit acting as master providing a fixed amount of torque greater than 50%, and the unit acting as slave providing the rest. The master-slave load sharing algorithm can be dependent on or independent of the direction of rotation.

The master drive unit can be controlled in speed and the slave drive unit in torque tracking mode for tracking the torque set point corresponding to the torque exerted at all times by the master drive unit, set for respecting the percentages of load/torque sharing established between both units. The master and slave drive units can also be controlled in speed, both speed set points being the same and the slave drive unit having a torque limit which will correspond to the torque exerted by the master drive unit at all times, set for respecting the percentages of load/torque sharing established between both units.

The master unit can be formed by the drive unit furthest from the passenger entrance, therefore being dependent on the direction of movement. This master unit must provide most of the power required by the system, the other motor being a mere assisting slave.

Different coordination strategies can be used, for example the motor placed in the passenger exit area for this direction of movement can be the master, providing the walkway with most of the power required, the other motor being limited to assisting it. Another possible embodiment would be setting the upper head motor of the walkway as the master of the system, providing as in the case above most of the power required for both directions of movement. The motor located in the lower head would always be limited to providing the additional power required by the system according to its load state.

The overall control means for controlling the entire traction system will be responsible for executing this motor coordination strategy, issuing the necessary commands to the control means for controlling said motors. The control means are responsible for directly controlling the motors so that they provide the torque and the speed required at all times. A possible embodiment of this device is that of a frequency variator for alternating current motors by means of PWM based on an architecture of AC/DC rectification, DC Bus and a DC/AC converter with a PWM output and control, although other embodiments are possible.

### Brief Description of the Drawings

An embodiment of the drive system of the invention is shown in the attached drawings:
- Figure 1 shows a schematic view of a conventional walkway with 2 drive units.
- Figure 2 shows a diagram of the control and actuation means of the drive system of the invention.
- Figure 3a shows the stress distribution in a walkway with a drive unit in the up direction.
- Figure 3b shows the stress distribution in a walkway with a drive unit in the downward direction.
- Figure 4a shows the stress distribution in a walkway with two drive units in the up direction and master dependent on the direction of rotation.
- Figure 4b shows the stress distribution in a walkway with two drive units in the down direction and master dependent on the direction of rotation.
- Figure 5a shows the stress distribution in a walkway with two drive units in the up direction and master in the upper head.
- Figure 5b shows the stress distribution in a walkway with two drive units in the down direction and master in the upper head.
- Figure 6 shows the traction system diagram of the band of pallets.

### Detailed Description of an Embodiment

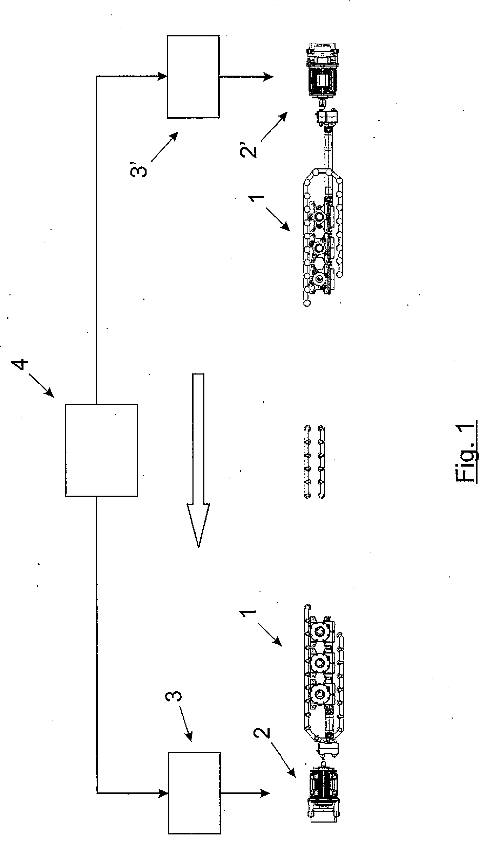

Figure 1 schematically shows the different components of the drive system of the invention which include a drive system 1 of the band of pallets and at each end of the walkway a drive unit made up of one or more motors 2-2', control means 3-3' for controlling the motors 2-2', and overall control means 4 for controlling the system.

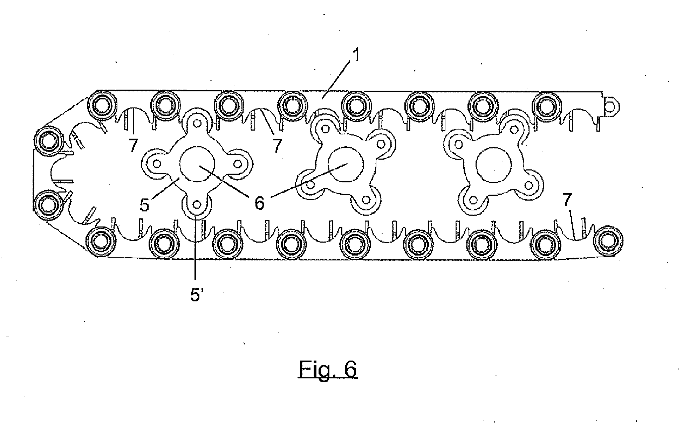

A preferred not exclusive embodiment of the drive system for driving the band of pallets 1 is that described in ES 2342532 from the same applicants consisting of, as shown in Figure 6, a series of wheels 5 with rollers 5'. The wheels 5 are arranged on shafts 6 perpendicular to the direction of movement of the band of pallets 1. The shafts 6 are driven by the motor/motors by means of a series of transmissions, for example by gears. The power is transmitted to the band of pallets 1 by means of engaging the rollers 6 in the engaging formations 7 of the pallets.

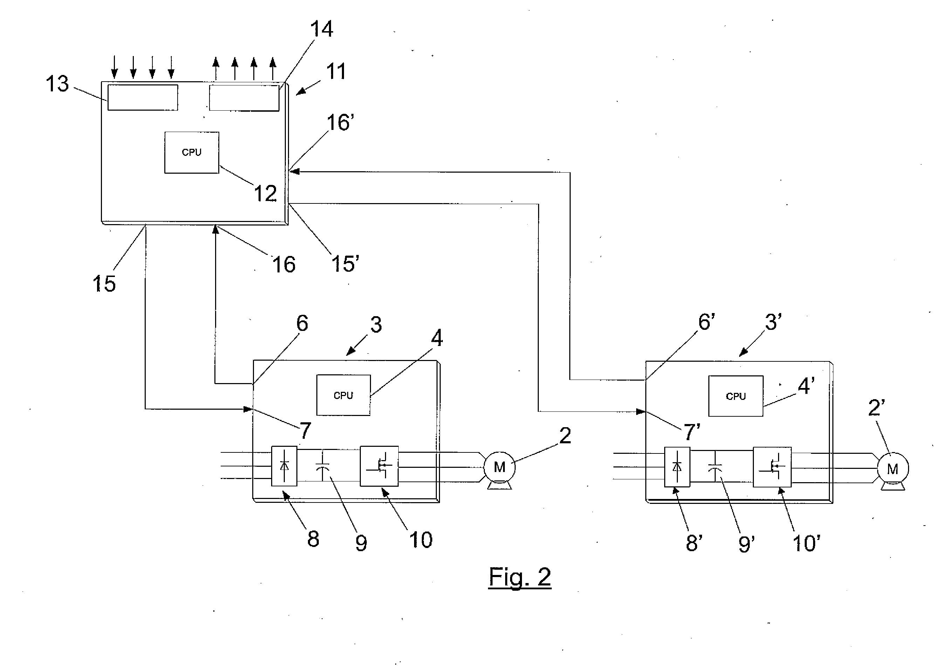

The control means 3-3' for controlling the motors can preferably consist of, although not exclusively, a frequency variator for alternating current motors with a closed loop vector control algorithm, the block diagram of which corresponds to that indicated in Figure 2 with the references 3-3': it contains an input rectifier 8-8' which generates the direct voltage for a DC BUS 9-9' from where the DC-AC inverter 10-10' powering the motor 2-2' is powered.

The control means 3-3' for controlling the motor must be capable of controlling the motor 2-2' for tracking the speed and/or position and/or torque set points indicated by the overall control means of the system as well as providing it with several state variables such as torque exerted by the motor, speed of rotation, etc... To that end, it may need information from other external sensors such as motor speed and/or position measuring sensors (encoders), sensors for current flowing through the motor phases, torquemeters, etc...

A preferred embodiment of a motor coordination algorithm consists of defining a master motor which will always be on the side furthest from the passenger entrance, therefore it is dependent on the direction of movement. This master must provide most of the power required by the system the other motor being a mere assisting slave.

In the preferred embodiment, the overall control and supervision means of the system send commands to the control means for controlling the motors so that the master provides a fixed amount of torque, for example 60%, and the slave provides the rest, for example 40%.

To perform this, the overall control means of the system sends commands to the control means for controlling the master motor so that it maintains a constant speed in the selected direction of movement, which will be that of the band of pallets. At the same time it sends the current torque value of the master to the slave motor control system. This motor will be controlled in torque mode, i.e., its control means will attempt to make the motor reach the torque set point by not actively controlling its speed.

This embodiment of the mechanism for transferring load from the master to the slave can work in the following manner: Initially the master motor sets the speed of the system which requires an initial_P_M torque, this value is transferred by the overall control means of the system to the slave. An infinitesimal instant later the slave, and therefore the rest of the system, is accelerated above the nominal speed of the master for the purpose of reaching the initial_P_M torque, the control means for controlling the master responded by reducing its torque to attempt to keep the initial speed of the system constant. This new torque value of the master is transferred again to the slave such that after several iterations of this process a torque equilibrium is reached between the two motors according to the torque sharing percentage established (for example 60% master, 40% slave) and the nominal speed also being maintained.

To maximally reduce the small speed oscillations of the system during load sharing it is necessary that the different control means are efficiently interconnected in terms of reliability, precision and speed. This will assure a quick transfer of the operation variables of each motor such as torque exerted, speed, etc... to the control means and these can thus send the suitable commands.

A possible embodiment would be by means of using analogue signals in the form of 4-20 mA current loop allowing greater speed, precision and is suitable for large transmission distances of hundreds of metres.

At the same time as the motor coordination algorithm is executed the control means must control that the state of the system is correct, for example in case of an unjustified over-torque in one of the motors the system has to be taken to a safe position. Another situation to control would be the failure of one of the motors or of its control system.

The preferred architecture for implementing overall control means of the system would be that depicted in Figure 2, with reference 11, being made up of:
- One or several CPUs 12 which will execute the control algorithms.
- One or several external signal input modules 13 such as for example the order of movement, direction of forward or reverse movement, nominal speed, etc...
- One or several external signal output modules 14 such as state of the system/failure, current speed, current torque exerted, etc...
- One or several output modules 15-15' per motor control means present, usually two: control means 3 for controlling the upper head motor and control means 3' for controlling the lower head. These will process the set point signals sent to these systems such as for example torque to be exerted, speed to be maintained, etc...
- One or several input modules 16-16' per motor control means present, usually two: control means for controlling the upper head motor and control means for controlling the lower head. These will process the state signal of these systems such as for example the torque exerted, current speed, etc...

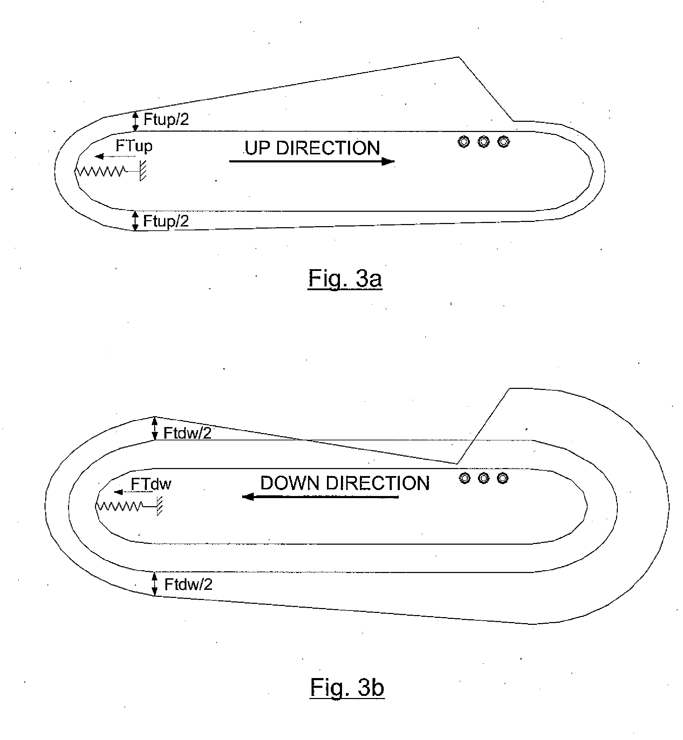

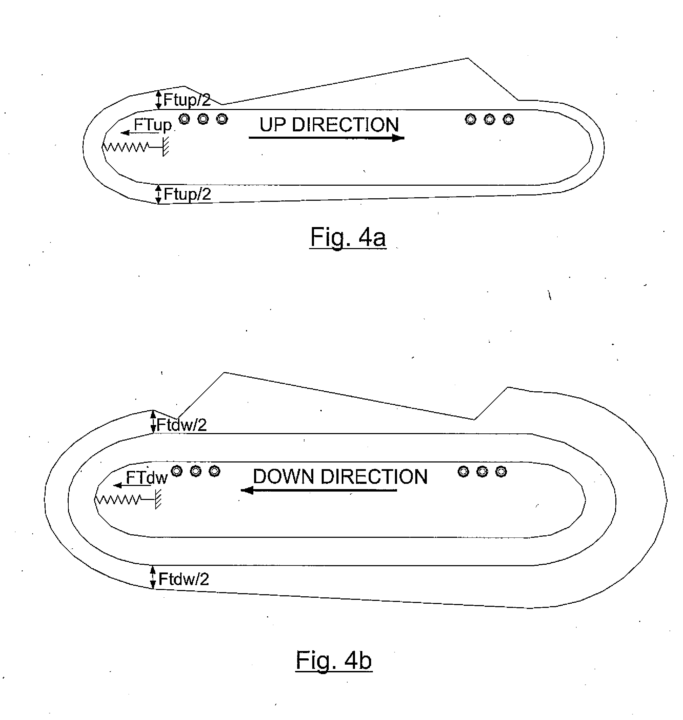

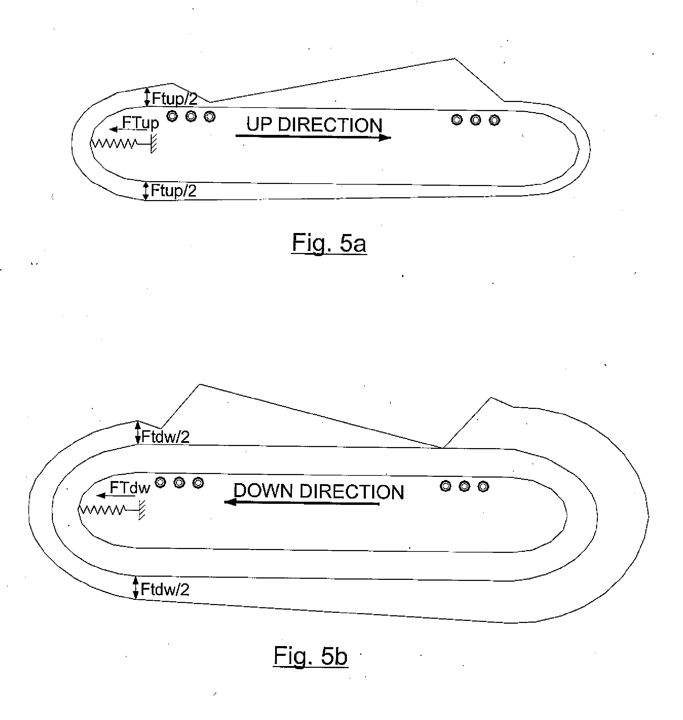

Having described the above a stress distribution corresponding to Figures 4a and 4b (preferred embodiment with a floating master) or to Figures 5a and 5b (embodiment with a fixed master independent of the direction of rotation) where how the maximum stress levels are lower than those obtained with a single and fixed drive system can be seen (Figures 3a and 3b), is to be achieved.

## Claims

1. A drive system for driving moving walkways, the walkways of which are formed by a band of pallets which moves on side guides, **characterised in that** it comprises a drive unit (2-2') arranged at each end of the walkway (1), control means (3-3') for controlling each drive unit, and overall control means (4) for controlling the set of drive units (3-3'); the drive units (3-3') of which work together cooperatively to jointly provide the power necessary for driving the walkway, and they include at least one motor each; and the control means (3-3') of which for controlling each drive unit directly control the motor or motors of said drive units for providing the torque and speed required at all times; and the overall control means (4) of which includes a control and/or supervision algorithm responsible for executing the coordination strategy between the motors of the drive units and issuing the necessary commands to the control means for controlling each drive unit.

2. The system according to claim 1, **characterised in that** the control means (3-3') for controlling the motor or motors of each drive unit comprise a frequency variator for alternating current motors with a closed loop vector control algorithm.

3. The system according to claim 2, **characterised in that** the frequency variator includes an input rectifier (8) responsible for generating the direct voltage for a DC-BUS (9), from where a DC-AC inverter (10) powering the motor (2-2') is powered.

4. The system according to claim 1, **characterised in that** the drive units (2-2') arranged on either side of the walkway (1) work together cooperatively with a master-slave load sharing algorithm, the drive unit acting as master providing a fixed amount of torque greater than 50%, and the unit acting as slave providing the rest.

5. The system according to claim 4, **characterised in that** the master drive unit is controlled in speed and the slave drive unit is controlled in torque tracking mode, for tracking the torque set point corresponding to the torque exerted at all times by the master drive unit, set for respecting the percentages of load/torque sharing established between both units.

6. The system according to claim 4, **characterised in that** the master drive unit and the slave drive unit are controlled in speed, both speed set points being the same, the slave drive unit having a torque limit which will correspond to the torque exerted by the master drive unit at all times, set for respecting the percentages of load/torque sharing established between both units.

7. The system according to claim 4, **characterised in that** the master unit is formed by the drive unit furthest from the passenger entrance.

8. The system according to claim 4, **characterised in that** the master-slave load sharing algorithm is dependent on the direction of rotation.

9. The system according to claim 4, **characterised in that** the master-slave load sharing algorithm is independent of the direction of rotation.

10. The system according to preceding claims, **characterised in that** the overall control means are implemented in a single hardware device.

11. The system according to claims 1 to 9, **characterised in that** the overall control system is implemented in a series of hardware modules distributed in the drive units and attached to one another by analogue or digital communications, one of the modules acting as master and the rest as slaves and the master being assigned to the master drive unit.

12. The system according to claims 1 to 9, **characterised in that** the overall control system is implemented in a series of hardware modules distributed in the drive units and integrated in the control means for controlling the motors and attached to one another by analogue or digital communications, one of the modules acting as master and the rest as slave and the master being assigned to the master drive unit.
